## Europäisches Patentamt
## European Patent Office
## Office européen des brevets

(19)

(11) Publication number: **0 119 335**
**B1**

(12)

# EUROPEAN PATENT SPECIFICATION

(45) Date of publication of patent specification: **07.09.88**

(51) Int. Cl.⁴: **F 16 G 5/06**

(21) Application number: **83301458.2**

(22) Date of filing: **16.03.83**

(54) **Power transmission belt.**

(43) Date of publication of application:
**26.09.84 Bulletin 84/39**

(45) Publication of the grant of the patent:
**07.09.88 Bulletin 88/36**

(84) Designated Contracting States:
**AT DE FR GB IT**

(56) References cited:
**EP-A-0 014 561**
**DE-A-2 754 793**
**US-A-2 446 310**
**US-A-4 031 768**
**US-A-4 127 039**

(73) Proprietor: **MITSUBOSHI BELTING LTD.**
**No. 1-21, Hamazoedori 4-Chome Nagata-ku**
**Kobe-shi Hyogo (JP)**

(72) Inventor: **Tanaka, Hideaki**
**No. 1-20-404, 6-chome, Takekuradai**
**Suma-ku Kobe (JP)**
Inventor: **Fujita, Kunihiro**
**No. 1-16, Maruhashi-cho**
**Nishinomita Hyogo (JP)**
Inventor: **Ushiroda, Mitsuhiro**
**No. 1-2, Zenshoji-cho**
**Suma-ku Kobe (JP)**

(74) Representative: **Jones, Michael Raymond et al**
**HASELTINE LAKE & CO. Hazlitt House 28**
**Southampton Buildings Chancery Lane**
**London WC2A 1AT (GB)**

EP 0 119 335 B1

Courier Press, Leamington Spa, England.

**0 119 335**

## Description

This invention relates to power transmission belts and in particular to power transmission V-belts adapted to provide high power transmission.

In one form of power transmission belt, the belt has a trapezoidal cross section which is generally complementary to the groove of the pulley with which the belt is entrained in the drive system. However, under high power transmission, the belt tends to be deformed inwardly into the pulley groove, causing excessive loading and stress concentration on the tension member of the belt. As a result of the deformation, cracks can deform in the belt resulting in shortened useful life of the belt.

Another problem found in the conventional V-belts of this type is the elongation which tends to occur under driving conditions. Such elongation lowers the tension of the belt about the pulleys, causing slipping and resultant degradation of the side surfaces of the belt due to frictional heating thereof. Such degradation includes cracking and belt heat aging, again shortening the useful life of the belt undesirably.

In a number of the prior art drive systems, the belt is caused to be reversely bent around one or more pulleys or rollers. Commonly, the bending in this reverse direction causes cracking at the bottom of the belt, again shortening the useful life thereof.

DE—A—27 54 793 discloses a power transmission belt comprising an inner compression rubber portion and an outer tension rubber portion. A plurality of transversely extending reinforcing fibres are distributed throughout the belt body, and a plurality of tensile cords, extending longitudinally of the belt, are located between the compression and tension portions.

US—A—2 446 310 discloses a power transmission belt having an inner compression rubber portion and an outer tension rubber portion. A plurality of longitudinally extending tensile cords are located in an intermediate rubber portion, which also contains a plurality of transversely extending fibres.

According to the present invention, there is provided a power transmission belt (24, 30, 33, 37, 38, 39) having a belt body comprising an inner compression portion (26, 36), an outer tension portion (25, 32, 35), tensile cords (28) extending longitudinally of the belt, and

a plurality of transversely extending reinforcing staple fibers (27, 34) distributed in at least one of said portions,

characterised in that said tensile cords are embedded, within the distribution of said staple fibers, fully within one of said portions to be spaced from the other of said portions.

It should be noted that the reference numerals in this statement of invention correspond to those used in describing the illustrated embodiments of the invention. Their inclusion should not be taken to have any limiting effect on the scope of the claims.

In the illustrated embodiments, the staple fibers have a length in the range of approximately 1 mm to approximately 20 mm.

The staple fibers illustratively comprise metal fibers, synthetic resin fibers, etc., and in the illustrated embodiment, define cut ends.

The outer compression rubber portion is formed of a rubber having a hardness of approximately 70° to 90° as measured on a JIS hardness meter.

In the illustrated embodiments, the staple fibers are present in an amount by weight of approximately 5 to 50 parts per 100 parts rubber.

In one form, the belt comprises a raw edge belt and, in a modified form, the belt is provided with an outer covering fabric.

The fabric, in the illustrated embodiment, is bias-laid.

The belt construction, in one embodiment, may include a plurality of transversely extending reinforcing staple fibers distributed in the inner compression rubber portion only.

In one form, the reinforcing staple fibers are distributed throughout the entire cross section of the belt body.

The belt may be provided with an outer covering fabric which similarly may be bias-laid.

In one embodiment, the outer compression portion includes an outermost portion free of reinforcing staple fibers.

In the illustrated embodiment, the tensile cords are disposed substantially midway between the inner and outer boundaries of the staple fiber distribution.

In the illustrated embodiment, the depth of the outermost portion free of the reinforcing staple fibers is less than the depth of the compression portion provided with the fibers.

The improved V-belt manufacture of the present invention is extremely simple and economical of construction while yet providing long, troublefree life in avoidance of the deformation problems of the prior art belts, as discussed above.

Other features and advantages of the invention will be apparent from the following description taken in connection with the accompanying drawing, wherein:

Figure 1 is a schematic elevation illustrating a drive system utilizing a V-belt embodying the invention;

Figure 2 is a fragmentary transverse section illustrating a conventional prior art V-belt entrained in a pulley groove;

Figure 3 is a fragmentary cross section illustrating the deformation of such a prior art V-belt under load;

2

Figure 4 is a fragmentary transverse section illustrating the formation of a crack in the V-belt resulting from such deformation;

Figure 5 is a fragmentary perspective view of a cut portion of a V-belt embodying the invention;

Figure 6 is a transverse section of a conventional V-belt utilizing transverse staple fibers in areas spaced from the tensile cord cushion rubber;

Figure 7 is a transverse section of a modified form of V-belt embodying the invention;

Figure 8 is a transverse section of another modified form of V-belt embodying the invention;

Figure 9 is a transverse section of still another modified form of V-belt embodying the invention;

Figure 10 is a transverse section of yet another modified form of V-belt embodying the invention; and

Figure 11 is a transverse section of a further modified form of V-belt embodying the invention.

The present invention is concerned with a power transmission belt, such as belt 10, for transmitting power between a driver pulley 11 and a driven pulley 12.

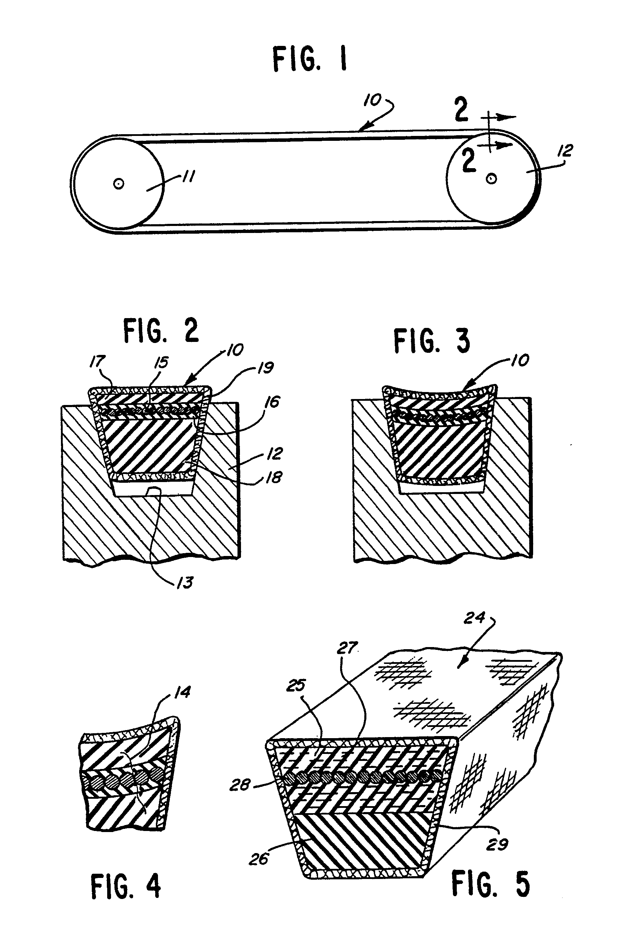

As shown in Figure 2, the V-belt seats in a groove 13 in the pulley when entrained thereabout. The groove is complementary in cross section to the cross section of the V-belt so as to have a driving or driven fit therebetween.

However, as indicated in Figure 3, when high loads are transmitted by the belt, the belt tends to deform inwardly into the groove introducing stress forces in the body of the belt, tending to result in the formation of cracks, such as crack 14 illustrated in Figure 4.

As illustrated in Figure 1, the conventional prior art belts embed tensile cords 15 in a layer 16 of cushion rubber. A tension rubber portion 17 is provided outwardly of the cushion rubber portion 16, and a compression rubber portion 18 is provided inwardly thereof. In the embodiment of Figure 2, the belt 10 comprises a covered belt having a cover of fabric 19 wrapped thereabout.

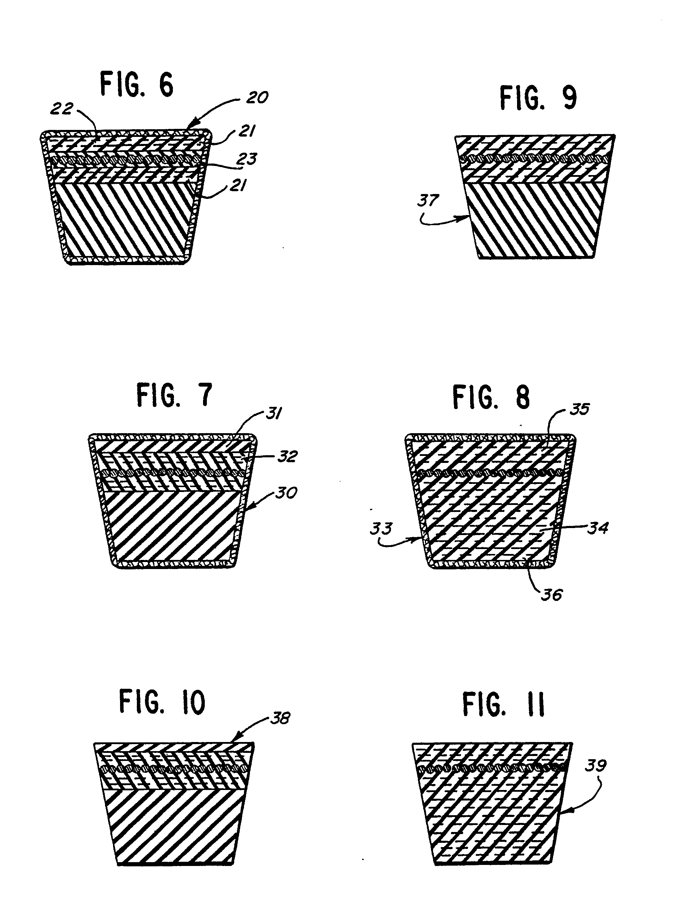

Referring to Figure 6, a modified form of prior art V-belt generally designated 20 is shown to comprise a belt generally similar to belt 10 but wherein a plurality of short staple reinforcing fibers 21 are provided in the tension rubber portion 22 in which the cushion rubber portion 23 is disposed.

While the V-belt 20 provides an improvement over the conventional V-belt 10, under high load conditions, some deformation of the V-belt occurs so that deterioration of the cushion rubber remains a problem thus, formation of cracks 14 is not effectively eliminated.

In addition, each of the prior art belts 10 and 20 is deformed under high tension so as to cause movement of the tensile cords in the rubber so as to cause overlapping displacement thereof aggravating the degradation problem. Such degradation further causes wear at the sides of the belt as a result of increased friction with the pulley groove sidewalls. The resultant generation of heat aggravates the cracking problem and general belt heat aging problem.

Another problem arises in such prior art belts in that, in certain applications, the belt is reversely bent about one or more pulleys or rollers in the drive system. The prior art belts tend to have substantial cracking problems resulting from such reverse bending.

Thus, the prior art belts both with and without the transverse reinforcing staple fibers, as illustrated in the belts 10 and 20 discussed above, have a shortened useful life, causing undesirable maintenance problems and increased cost in the use of the drive systems.

Referring to Figure 5, the present invention comprehends an improved V-belt structure generally designated 24 which has been found to overcome the problems of the prior art belts discussed above in a novel and simple manner.

More specifically, as shown in Figure 5, V-belt 24 includes an outer tension rubber portion 25 and an inner compression rubber portion 26. Transversely extending reinforcing staple fibers 27 are uniformly dispersed in the tension rubber portion both outwardly and inwardly of the tensile cords 28 embedded in the tension rubber section.

In the illustrated embodiment, the staple fibers 27 have a length in the range of approximately 1 mm to approximately 20 mm. The fibers may be formed of a suitable fibrous material, such as cotton yarn, rayon, nylon, teteron (polyester resin), vinylon (polyvinyl alcohol), etc.

The fibers are preferably cut to the desired length so as to define cut ends, providing improved retention of the fibers in the cushion rubber. Preferably, the transversely extending reinforcing fibers 27 are present in a ratio of approximately 5 to 50 percent by weight. Preferably, the tension rubber 25 has a surface hardness of approximately 70 to 90°, as measured on a JIS hardness meter. It has been found that where the hardness is outside the preferred range, buckling resistance is poor.

The invention further comprehends the provision of cord fabrics or fabrics consisting of spun or twisted yarns, such as cotton, rayon, nylon, polyester, etc. yarn, may be used in providing improved deformation resistance.

The tension cord members may comprise conventional cords formed of suitable high strength material, such as polyester resin, aliphatic polyamide resin, aromatic polyamide resin (Kevlar) etc.. The tension and compression rubber sections may be formed of suitable rubber, such as natural rubber, chloroprene rubber, styrene-butadiene rubber blends, etc.

In the illustrated embodiment, V-belt 24 comprises a covered belt having an outer fabric covering 29. The fabric is laminated, or adhered, to the outer surface of the V-belt rubber and may be bias-laid. The fabric may comprise a rubber-coated fabric having one or more layers wherein the warp and weft are

3

0 119 335

woven at a wide crossing angle, such as in the range of approximately 90° to 140°. The fabric may be formed of cotton, nylon, polyester, etc., yarns, as desired.

The improved V-belt 24 is advantageously adapted for use in high power transmission drive systems, such as in farming apparatus, snow plows, etc.

As illustrated in Figures 7—11, the improved V-belt construction of the present invention may be utilized in a number of different forms. Thus, as illustrated in Figure 7, a modified form of V-belt generally designated 30 embodying the invention is shown to comprise a V-belt generally similar to V-belt 24, but wherein an outer portion 31 of the tension rubber section 32 is free of the transverse reinforcing staple fibers.

Referring to Figure 8, still another modified form of V-belt embodying the invention generally designated 33 is shown to comprise a V-belt generally similar to V-belt 24, but wherein the staple fibers 34 are distributed throughout both the tension rubber section 35 and compression rubber section 36.

As further illustrated in Figure 9, a further modified form of V-belt embodying the invention generally designated 37 is shown to comprise a V-belt generally similar to V-belt 24, but wherein the cover fabric 29 is omitted. Thus, V-belt 37 comprises a raw edge V-belt otherwise similar to the covered V-belt 24.

Another modified form of raw edge V-belt generally designated 38 is illustrated in Figure 10 as comprising a V-belt generally similar to V-belt 30 of Figure 7, but wherein the outer fabric is omitted.

Another modified form of V-belt generally designated 39 is illustrated in Figure 11 as comprising a V-belt generally similar to V-belt 33, but wherein the outer fabric is omitted.

Thus, Figures 9—11 illustrate additional embodiments of the invention comprehended within the broad scope thereof. As will be obvious to those skilled in the art, other modifications of the V-belt construction may be utilized within the broad scope of the invention as discussed above.

The provision of the reinforcing staple fibers in the rubber in which the tensile cord is embedded provides a substantially improved resistance to degradation and cracking and, thus, improved long trouble-free life of the V-belt. Illustratively, as indicated in Table I set out below, belts of the present invention were found to provide substantial increase in the useful life of the belt. In carrying out the test, a B-type V-belt 2500 mm in circumferential length, 16.5 mm wide, and 11.0 mm high, was formed both in the configuration of the V-belt 24 of the present invention and the prior art V-belt 20. An LB-type V-belt 1100 mm in circumferential length, 16.5 mm wide and 9.5 mm high, was formed in both configurations. The running test was conducted by driving the belts in a system having a drive pulley 114 mm in diameter, a driven pulley 114 mm in diameter, a tension pulley 152 mm in diameter engaging the outer surface of the belt so as to provide a reverse bend therein, and a second tension pulley 106 mm in diameter engaging the compression portion of the belt.

TABLE I

| | | Conventional belt | Belt of this invention |
|---|---|---|---|
| B-type | Running life | 50 hrs | 200 hrs |
| LB-type | Running life | 88 hrs | 117 hrs |

Thus, as shown, the belts of the present invention were found to have had a useful life extended approximately 1.3 to 4 times that of the conventional fiber-reinforced belt 20.

Provision of the staple reinforcing fibers in the rubber in which the tensile cord is embedded provides a barrier against vertical and horizontal movement of the tension cord members. Such reinforcing provides improved resistance to vertical cracking in both the tension and compression rubber portions and effectively prevents the entanglement of the tensile cords commonly occurring in the belts of the prior art.

As a result, the improved belt constructions of the present invention provide extended useful life, improved performance and power transmission efficiency.

**Claims**

1. A power transmission belt having a belt body comprising an inner compression portion, an outer tension portion, tensile cords extending longitudinally of the belt, and a plurality of transversely extending reinforcing staple fibers distributed in at least one of said portions, characterised in that said tensile cords are embedded, within the distribution of said staple fibers, fully within one of said portions to be spaced from the other of said portions.

2. A belt as claimed in claim 1, wherein the reinforcing staple fibers are distributed in said inner compression rubber portion.

3. A belt according to claim 2, wherein the reinforcing staple fibers are distributed throughout the entire cross section of the belt body.

4

4. A belt according to claim 1, 2 or 3, wherein said outer tension rubber portion is formed of a rubber having a hardness of 70° to 90° as measured on a JIS hardness meter.

5. A belt as claimed in claim 1 or 2, further characterised in that the outer tension portion includes an outermost region free of said reinforcing staple fibers.

6. A belt according to claim 5, further characterised in that the tensile cords are disposed substantially midway between the inner and outer boundaries of the staple fiber distribution.

7. A belt according to claim 5 or 6, further characterised in that the depth of the outermost region is substantially less than the depth of the portion provided with said fibers.

8. A belt according to claim 5, 6 or 7, further characterised in that the hardness of the rubber portion in which the tensile cords and staple fibers are embedded is approximately in the range of from 70° to 80°.

9. A belt according to any preceding claim, wherein the staple fibers have a length in the range of approximately 1 mm to approximately 20 mm.

10. A belt according to any preceding claim, wherein the fibers comprise natural fibers, or synthetic resin fibers, said fibers preferably defining cut ends.

11. A belt according to any preceding claim, wherein the staple fibers are present in an approximate amount by weight of 5 to 50 parts per 100 parts rubber.

12. A belt according to any preceding claim, wherein the belt comprises a raw edge belt.

13. A belt according to any one of claims 1 to 11, wherein the belt is provided with an outer covering fabric, preferably an outer bias-laid covering fabric.

**Patentansprüche**

1. Kraftübertragungsriemen mit einem Riemenkörper, welcher einen inneren Druckabschnitt, einen äußeren Zugabschnitt, sich in Längsrichtung des Riemens erstreckende Zugschnüre und eine Vielzahl von sich in Querrichtung erstreckenden, verstärkenden Stapelfasern aufweist, die in zumindest einem der beiden erwähnten Abschnitte verteilt sind, dadurch gekennzeichnet, daß die Zugschnüre innerhalb der verteilten Stapelfasern zur Gänze innerhalb eines der erwähnten Abschnitte mit Abstand vom anderen der erwähnten Abschnitte eingebettet sind.

2. Riemen nach Anspruch 1, worin die verstärkenden Stapelfasern im inneren Druckabschnitt aus Gummi verteilt sind.

3. Riemen nach Anspruch 2, worin die verstärkenden Stapelfasern über den gesamten Querschnitt des Riemenkörpers verteilt sind.

4. Riemen nach Anspruch 1, 2 oder 3, worin der aus Gummi aufgebaute äußere Zugabschnitt aus einem Gummi gebildet ist, welcher eine Härte von 70° bis 90°, gemessen mit einem JIS-Härtemeßgerät, besitzt.

5. Riemen nach Anspruch 1 oder 2, zusätzlich dadurch gekennzeichnet, daß der äußere Zugabschnitt einen von verstärkenden Stapelfasern freien äußersten Bereich aufweist.

6. Riemen nach Anspruch 5, weiters dadurch gekennzeichnet, daß die Zugschnüre im wesentlichen mittig zwischen der inneren Grenze und der äußeren Grenze der Stapelfaserverteilung angeordnet sind.

7. Riemen nach Anspruch 5 oder 6, weiters dadurch gekennzeichnet, daß die Tiefe des äußersten Bereiches wesentlich kleiner ist als die Tiefe des mit den erwähnten Fasern versehenen Bereiches.

8. Riemen nach Anspruch 5, 6 oder 7, weiters dadurch gekennzeichnet, daß die Härte des Gummibereiches, innerhalb desselben die Zugschnüre und die Stapelfasern eingebettet sind, etwa im Bereiche von 70° bis 80° liegt.

9. Riemen nach irgendeinem der vorhergehenden Ansprüche, worin die Stapelfasern eine innerhalb des Bereiches von etwa 1 mm bis etwa 20 mm liegende Länge besitzen.

10. Riemen nach irgendeinem der vorhergehenden Ansprüche, worin die Fasern Naturfasern oder Kunstharzfasern enthalten und die Fasern vorzugsweise beschnittene Enden definieren.

11. Riemen nach irgendeinem vorhergehenden Anspruch, worin die Stapelfasern annähernd in einer Gewichtsmenge von 5 bis 50 Teilen je 100 Teilen Gummi vorliegen.

12. Riemen nach irgendeinem vorhergehenden Anspruch, worin der Riemen einem Riemen mit roher Kante umfaßt.

13. Riemen nach irgendeinem der Ansprüche 1 bis 11, worin der Riemen mit einem äußeren Deckgewebe, vorzugsweise einem unter Vorspannung verlegten äußeren Deckgewebe, versehen ist.

**Revendications**

1. Courroie de transmission ayant un corps de courroie qui comporte une partie interne de compression, une partie externe de traction, des câblés élastiques, placés suivant la longueur de la courroie, et un certain nombre de fibres coupées de renforcement, disposées transversalement et réparties dans l'une au moins desdites parties, caractérisée en ce que les câblés élastiques sont noyés totalement, à l'intérieur de la distribution des fibres coupées, dans l'une des parties afin qu'ils soient distants de l'autre de ces parties.

**0 119 335**

2. Courroie selon la revendication 1, dans laquelle les fibres coupées de renforcement sont réparties dans la partie interne de caoutchouc de compression.

3. Courroie selon la revendication 2, dans laquelle les fibres coupées de renforcement sont réparties dans toute la section du corps de la courroie.

4. Courroie selon la revendication 1, 2 ou 3, dans laquelle la partie externe de caoutchouc de traction est formée d'un caoutchouc ayant une dureté comprise entre 70 et 90°, mesurée sur un appareil de mesure de dureté JIS.

5. Courroie selon la revendication 1 ou 2, caractérisée en outre en ce que la partie externe de traction comporte une région extrême dépourvue de fibres coupées de renforcement.

6. Courroie selon la revendication 5, caractérisée en outre en ce que les câblés élastiques sont disposés sensiblement à mi-distance entre les limites interne et externe de la distribution de fibres.

7. Courroie selon la revendication 5 ou 6, caractérisée en outre en ce que la profondeur de la région externe extrême est nettement inférieure à la profondeur de la partie ayant les fibres.

8. Courroie selon la revendication 5, 6 ou 7, caractérisée en outre en ce que la dureté de la partie du caoutchouc dans laquelle sont enrobés les câblés élastiques et les fibres coupées est approximativement de l'ordre de 70° à 80°.

9. Courroie selon l'une des revendications précédentes, dans laquelle les fibres ont une longueur comprise entre environ 1 mm et 20 mm.

10. Courroie selon l'une des revendications précédentes, dans laquelle les fibres comportent des fibres naturelles ou des fibres de résine synthétique, les fibres formant de préférence des extrémités coupées.

11. Courroie selon l'une des revendications précédentes, dans laquelle les fibres sont présentes en quantité pondérale de l'ordre de 5 à 50 parties pour 100 parties de caoutchouc.

12. Courroie selon l'une des revendications précédentes, dans laquelle la courroie comporte une courroie à bord brut.

13. Courroie selon l'une des revendications 1 à 11, dans laquelle la courroie est munie d'un tissu externe de recouvrement, de préférence une étoffe externe disposée en biais.

# FIG. 1

# FIG. 2

# FIG. 3

# FIG. 4

# FIG. 5

## FIG. 6

## FIG. 9

## FIG. 7

## FIG. 8

## FIG. 10

## FIG. 11